# EUROPEAN PATENT APPLICATION

(11) **EP 2 899 125 A1**
(43) Date of publication of application: **29.07.2015**
(21) Application number: 14152805.9
(22) Date of filing: 28.01.2014
(51) Int. Cl.: B64D 11/06

(54) **Seat arrangement, aircraft cabin as well as armrest and seat or seat group for use therein**

(71) Applicant: Airbus Defence and Space GmbH, 85521 Ottobrunn (DE)
(72) Inventor: Saint-Jalmes, Bruno, 80638 München (DE)
(74) Representative: Flügel Preissner Kastel Schober

(57) **Abstract**

For enabling more seats with a high comfort level, the invention provides a Seat arrangement (18) for a passenger compartment (14) of a vehicle (16) wherein the passenger compartment (14) has a floor (82) and concave side walls (84) so that the passenger compartment (14) has a narrower width in the lower height level (46) of the floor (82) and a larger width in a medium height level, wherein the seat arrangement (18) comprises a plurality of seats (20, 22, 23) arranged in at least one seat row (19) with at least one gap (78, 79) to form an aisle (80) between at least two of these seats (20, 22, 23) wherein an armrest (24) is arranged both on the left-hand side and on the right hand side of each seat (20, 22, 23) with an end armrest (24c) arranged on each of the both ends of the seat row (19), characterized in that
a) the width of the at least one seat row (19) including the end armrests (24c) when measured in a height level of the top surface (92) of the end armrests (24c) is larger as compared to the width of the at least one seat row (19) including the end armrest (24c) when measured in a height level (44, 46) of a lower part of the end armrests (24c); and/or
b) at least the end armrests (24c) and/or at least the end seats (88) are arranged in a higher height level when compared with a middle armrest (24a) or a middle seat, respectively.

## Description

The invention relates to a seat arrangement for a passenger compartment of a vehicle wherein the passenger compartment has a floor and concave side walls so that the passenger compartment has a narrower width in the lower height level of the floor and a larger width in a medium height level, wherein the seat arrangement comprises a plurality of seats arranged in at least one seat row with at least one gap to form an aisle between at least two of these seats wherein an armrest is arranged both on the left-hand side and on the right hand side of each seat with an end armrest arranged on each of the both ends of the seat row. One typical example for such a passenger compartment is an aircraft cabin, such as the cabin of AIRBUS A380. Further, the invention relates to an aircraft cabin comprising such a seat arrangement. Still further, the invention relates to a method for manufacturing an armrest or a seat for such a seat arrangement. Finally, the invention relates to an armrest or a seat or a seat group to be used in such a seat arrangement.

Today's A380 economy-class offers excellent comfort standards at 10 abreast; the main deck of A380 has a cabin with a seat arrangement having 10 seats in a seat row.

An object of the invention is to enable an arrangement of more seats in a seat row within a given space while maintaining a relatively large space between armrests of the seat row.

This object is achieved by the subject matter of the independent claims. Advantageous embodiments are subject-matter of the sub-claims.

The invention provides, according to a first aspect thereof, a seat arrangement for a passenger compartment of a vehicle wherein the passenger compartment has a floor and concave side walls so that the passenger compartment has a narrower width in the lower height level of the floor and a larger width in a medium height level, wherein the seat arrangement comprises a plurality of seats arranged in at least one seat row with at least one gap to form an aisle between at least two of these seats wherein an armrest is arranged both on the left-hand side and on the right-hand side of each seat with an end armrest arranged on each of the both ends of the seat row characterized in that
a) the width of the at least one seat row including the end armrests when measured in a height level of the top surface of the end armrests is larger as compared to the width of the at least one seat row including the end armrest when measured in a height level of a lower part of the end armrests.

According to a second aspect the invention provides a seat arrangement for a passenger compartment of a vehicle wherein the passenger compartment has a floor and concave side walls so that the passenger compartment has a narrower width in the lower height level of the floor and a larger width in a medium height level, wherein the seat arrangement comprises a plurality of seats arranged in at least one seat row with at least one gap to form an aisle between at least two of these seats wherein an armrest is arranged both on the left-hand side and on the right-hand side of each seat with an end armrest arranged on each of the both ends of the seat row characterized in that
b) at least one of the end armrests and/or at least one of the end seats are arranged in a higher height level when compared with a middle armrest or a middle seat, respectively.

With regard to b), it is preferred that at least the end armrests and/or at least the end seats are arranged in a higher height level when compared with a middle armrest or a middle seat, respectively.

It is also possible to provide a seat arrangement combining features a) and b) of the first and second aspects.

It is preferred that the seat arrangement is configured as a seat arrangement for an aircraft cabin.

According to another aspect, the invention provides an aircraft cabin comprising a floor and concave side walls and at least one seat arrangement to be fixed on the floor wherein the seat arrangement comprises a plurality of seats arranged in at least one seat row with at least one gap to form an aisle between at least two of these seats wherein an armrest is arranged both on the left-hand side and on the right-hand side of each seat with an end armrest arranged on each of the both ends of the seat row characterized in that the width of the at least one seat row including the end armrests when measured in a height level of the top surface of the end armrests is larger as compared to the width of the at least one seat row including the end armrest when measured in a height level of a lower part of the end armrests.

According to still another aspect, the invention provides an aircraft cabin comprising a floor and concave side walls and at least one seat arrangement to be fixed on the floor wherein the seat arrangement comprises a plurality of seats arranged in at least one seat row with at least one gap to form an aisle between at least two of these seats wherein an armrest is arranged both on the left-hand side and on the right-hand side of each seat with an end armrest arranged on each of the both ends of the seat row characterized in that at least the end armrests and/or at least the end seats are arranged in a higher height level when compared with a middle armrest or a middle seat, respectively.

It is preferred that the seat row is divided into at least three groups of seats and having at least two gaps for providing aisles in the aircraft cabin.

It is preferred that the seat row has a total width smaller or equal 253.3 inches, preferably 252.3", at the height of the top surface of the end armrests.

It is preferred that at least 11 seats are arranged in the at least one seat row.

It is preferred that each seat has a width between two armrests of at least 18 inches.

It is preferred that the width of the upper side of the armrests between two seats is at least 1.5 inches.

It is preferred that at least one seat at the outer side of the row is raised relative to another seat.

It is preferred that at least one seat at the outer side of the row is having an outer armrest or end armrest with an inclined side surface. It can also have a combination of a vertical side surface with the inclined surface.

It is preferred that the at least one seat row is divided into three groups wherein outer end groups at the ends of the seat row comprise three seats and a middle group between the end groups comprises five seats.

It is preferred that a width of the aisle gaps between seat backrests of the seats is at least 20 inches.

It is preferred that a width of the aisle gaps between armrests is at least 15" to 20" and preferably at least 17". Preferably, the width of the aisle gaps between the armrests ranges from 15" to 25" with a preference to 17".

It is preferred that the end armrests and/or at least one of a middle armrest between two seats have at least one adjustable support portion for supporting an arm of a passenger wherein the at least one adjustable support portion is adjustable in height and/or in width.

It is preferred that the at least one adjustable supporting portion of the end armrest has a larger width in an upper position and is narrower in a lower position.

It is preferred that the at least one adjustable supporting portion comprises at least one movable part being pivotally movable in an upward position to enlarge the height of the supporting portion and in a downward position to lower the height of the support portion.

It is preferred that the at least one adjustable supporting portion comprises at least one movable part being pivotable around a pivot axis wherein at least a direction component of the axis direction is oriented in longitudinal direction of the armrest.

It is preferred that the upper side of the adjustable support portion of the armrests of each seat has a width of at least 1.5 inches when being in the upper position.

It is preferred that the width of the outer seat including its armrests is reduced, preferably by 0.1 to 0.5 inches and especially by 0.35 inches, when a pivotably movable part of the armrest at the outer side of the seat row is moved from a vertical into a horizontal position.

It is preferred that the armrests arranged between two seats of the seat row and/or of a seat group of the seat row comprise at least one first support portion for an arm of a first person and at least one second support portion for an arm of a second person wherein the first and second support portions provide different height levels.

It is preferred that at least one of the end armrests comprises a top surface for supporting an arm of a passenger, an external outer surface configured to face the side wall of the passenger compartment, an internal surface for facing the center of the associated seat, and a lower surface to be directed downwardly.

It is preferred that an angle between at least a lower part of the outer armrest surface and the armrest top surface is smaller than 90°.

It is preferred that an angle between at least a lower part of the outer armrest surface and the armrest top surface is between 60° and 90°.

It is preferred that at least a part of the outer armrest surface is convex.

It is preferred that at least a part of the outer armrest surface is convexly curved.

It is preferred that at least a part of the outer armrest surface is curved with a radius of 150-700 cm (59" - 276"), preferably between 300-400 cm (118" - 157"), most preferred 378 cm (148").

It is preferred that the at least one end armrest has a trapezoidal contour with a wider top surface and a narrower lower surface.

It is preferred that the at least one end armrest is asymmetric.

According to another embodiment, it is preferred that the at least one end armrest is symmetric.

It is preferred that an angle between the external outer armrest surface and the armrest top surface is smaller than an angle between the inner armrest surface and the armrest top surface.

It is preferred that at least a part of the internal armrest surface extends in the horizontal direction.

According to another embodiment, it is preferred that the angle between at least a part of the internal armrest surface and the armrest top surface is 90°.

It is preferred that at least one of the end seats includes an end seat cushion comprising a top surface as seat surface for a passenger, an external outer surface configured to face the side wall of the passenger compartment, an internal surface for facing an adjacent seat, and a lower surface to be directed downwardly.

The main parts of a seat are a backrest and a seat cushion. Seat cushion means the lower part of a seat which supports a passenger. It comprises for example a foam, plastic and/or metal parts.

It is preferred that an angle between at least a lower part of the outer cushion surface and the cushion top surface is smaller than 90°.

It is preferred that an angle between at least a lower part of the outer cushion surface and the cushion top surface is between 60° and 90°.

The seat cushion can have an inclined side surface. The inclined side surface can be combined with a vertical side surface.

It is preferred that at least a part of the outer cushion surface is convex.

It is preferred that at least a part of the outer cushion surface is convexly curved.

It is preferred that at least a part of the outer cushion surface is curved with a radius of 150-700 cm (59" - 276"), preferably between 300-400 cm (118" - 157"), most preferred 378 cm (148").

It is preferred that the at least one end seat cushion has a trapezoidal contour with a wider top surface and a narrower lower surface.

It is preferred that the at least one end seat cushion is asymmetric.

According to another embodiment, it is preferred that the at least one end seat cushion is symmetric.

It is preferred that an angle between the external outer cushion surface and the cushion top surface is smaller than an angle between the inner cushion surface and the cushion top surface.

It is preferred that at least a part of the internal cushion surface extends in the horizontal direction.

It is preferred that the angle between at least a part of the internal cushion surface and the cushion top surface is 90°.

It is preferred that that each seat of the at least one seat row includes a seat cushion arranged between two armrests, wherein the end seats at the ends of the at least one seat row include an end seat cushion and an end armrest to be arranged between the end seat cushion and the side wall.

It is preferred that the end seat cushion is raised with regard to seat cushions of at least a middle or center seat of the seat row.

It is preferred that the end armrest is raised with regard to armrests of at least a middle or center seat of the seat row.

It is preferred that the at least one seat row is divided into two end groups arranged on the ends of seat row and at least one middle seat group.

It is preferred that at least the end seats are raised with regard to the seats of the middle group.

It is preferred that the end seats and at least one further seat of the end groups are raised with regard to the seats of the middle group.

It is preferred that all seats of the end groups are raised with regard to the seats of the middle group.

It is preferred that the height by which the end seats or parts thereof are raised with regard to other seats or parts thereof is between 1" and 3", especially 2.1 ".

It is preferred that the outer lateral contour of at least one end armrest is adapted to the contour of the side wall

It is preferred that the outer lateral contour of at least one end seat is adapted to the contour of the side wall.

It is preferred that the outer lateral contour of at least one end seat cushion is adapted to the contour of the side wall.

It is preferred that a gap with a gap distance between 0.4" and 1 ", especially 0.5" is provided between an external outer surface of the end armrest and the side wall.

It is preferred that a gap with a gap distance between 0.4" and 1 ", especially 0.5" is provided between an external outer surface of the end seat cushion of each end seat and the side wall.

According to a further aspect, the invention provides a method for manufacturing an end armrest for use in such a seat arrangement or aircraft cabin according to any of the aspects or embodiments of the invention and/or in an aircraft cabin. Preferably, the method comprises forming an outer external surface of the end armrest to adapt it to the side wall contour of the passenger compartment such as an aircraft cabin so that the whole end armrest can be arranged in close proximity to the side wall.

According to a further aspect, the invention provides a method for manufacturing a seat or a seat group to be used in a seat arrangement and/or in an aircraft cabin according to any of the aspects or embodiments of the invention. This method preferably comprises the steps of conducting the method of manufacturing the end armrest for providing an end armrest and fixing the end armrest to an end seat.

Preferably, the seat manufacturing method further comprises forming an outer contour of a seat cushion of the end seat to adapt it to the contour of the side wall so that a seat surface of the end seat can be arranged in close proximity to the side wall.

According to another aspect, the invention provides an armrest for use in a seat arrangement and/or in an aircraft cabin, especially in a seat arrangement or aircraft cabin according to any of the aspects or embodiments of the invention.

It is preferred that the armrest is an end armrests and/or at least one middle armrest for arrangement between two seats.

It is preferred that the armrest has at least one adjustable support portion for supporting an arm of a passenger.

It is preferred that the at least one adjustable support portion is adjustable in height and/or in width.

It is preferred that an outer edge of the at least one adjustable supporting portion of the armrest - especially of the end armrest - has a larger distance from a center of the associated seat in an upper position and smaller distance from the center of the associated seat in a lower position.

It is preferred that the at least one adjustable supporting portion comprises at least one movable part being pivotally movable in an upward position to enlarge the height of the supporting portion and in a downward position to lower the height of the support portion.

It is preferred that the at least one adjustable supporting portion comprises at least one movable part being pivotable around a pivot axis wherein at least a direction component of the axis direction is oriented in longitudinal direction of the armrest.

It is preferred that the upper side of the adjustable support portion of the armrest has a width of at least 1.5 inches when being in the upper position.

It is preferred that the width of the armrests is reduced, preferably by 0.1 to 0.5 inches and especially by 0.35 inches, when a pivotably movable part of the armrest is moved from a vertical into a horizontal position.

It is preferred that the armrests - especially a middle armrest for arrangement between two seats of the seat row an/or of a seat group of the seat row - comprise at least one first support portion for an arm of a first person and at least one second support portion for an arm of a second person wherein the first and second support portions provide different height levels.

It is preferred that the armrest comprises a top surface for supporting an arm of a passenger, an external outer surface configured to face the side wall of the passenger compartment, an internal surface for facing the center of the associated seat, and a lower surface to be directed downwardly.

It is preferred that an angle between at least a lower part of the outer armrest surface and the armrest top surface is smaller than 90°.

It is preferred that an angle between at least a lower part of the outer armrest surface and the armrest top surface is between 60° and 90°.

It is preferred that at least a part of the outer armrest surface is convex.

It is preferred that at least a part of the outer armrest surface is convexly curved.

It is preferred that at least a part of the outer armrest surface is curved with a radius of 150-700 cm (59" - 276"), preferably between 300-400 cm (118" - 157"), most preferred 378 cm (148").

It is preferred that the at least one armrest has a trapezoidal contour with a wider top surface and a narrower lower surface.

It is preferred that the at least one armrest is asymmetric.

According to another embodiment, it is preferred that the at least one armrest is symmetric.

It is preferred that an angle between the external outer armrest surface and the armrest top surface is smaller than an angle between the inner armrest surface and the armrest top surface.

It is preferred that at least a part of the internal armrest surface extends in the horizontal direction.

According to another embodiment, it is preferred that the angle between at least a part of the internal armrest surface and the armrest top surface is 90°.

One preferred embodiment of the armrest aspect of the invention proposes a transformable armrest to fulfill both needs:
- increased lateral space for passenger when seated, and
- preserve the capability to increase the comfort of the armrest. The two adjacent passengers will not fight to find a place on the armrest.

With regard to a middle armrest, a preferred embodiment provides an armrest for arrangement between two seats, especially two passenger seats of a vehicle such as an aircraft, comprising at least one first support portion for an arm of a first person and at least one second support portion for an arm of a second person wherein the first and second support portions provide different height levels.

Preferably, the armrest is adjustable to provide different height levels of the first and second support portions.

A preferred embodiment of the armrest is configured for arrangement between two passenger seats of a vehicle, especially an aircraft, comprising at least one first support portion for a passenger's arm and at least one second support portion for a passenger's arm wherein the first and second support portions are adjustable to different height levels.

Preferably, the first and second support portions are arranged one after another in a longitudinal direction of the armrest.

Preferably, at least one of the supporting portions is adjustable in height and/or in width.

Preferably, at least one of the supporting portions comprises at least one wing element or lid being pivotally movable in an upward position to enlarge the height of the supporting portion and in a downward position to enlarge the width of the support portion.

Preferably, the at least one supporting portion comprises a first lid and a second lid pivotally movable in counter rotation manner between their upward and downward positions.

Preferably, the first and second lids are arranged and/or configured in a symmetrical manner with regard to a longitudinal center plane of the arm rest.

Preferably, the at least one lid is pivotable around a pivot axis wherein at least a component of the axis direction extends in longitudinal direction of the armrest.

Preferably, the at least one lid has a narrower first arm support surface extending in a tangential direction with regard to the pivot movement of the lid and a wider second arm support surface that extends parallel to a radial direction with regard to the pivot movement of the lid.

Preferably, the armrest is pivotally linked so that it can pivot between an essentially vertical arm rest position and an essentially horizontal arm rest position.

By using the ideas of embodiments of the invention, it is even possible to decrease a space between adjacent passenger seats without lowering the comfort of the passengers sharing an armrest.

For example, the seat arrangement of the invention makes it possible to arrange more seats in a row as compared with today's seat arrangements. For example, on a main deck of an Airbus A380, it is possible to have 11 seats in a row instead of 10.

One preferred embodiment of the invention provides a foldable armrest.

A solution to have more seats in a row is the specific configuration of armrests.

Especially with regard to middle armrests, the upper surface of the armrest has at least two levels for the arms of the two passengers sitting side by side.

For example, the upper surface of the front part of the armrest is elevated relative to the upper surface of the back part. In this way one passenger can put his arm on the elevated front part, while his neighbour can put his arm on the relatively lower back part.

Preferably, the part forming the elevated surface comprises two pieces or plates oriented in parallel which can be unfolded, thus building a broad surface which is enough for carrying the arms of both passengers. The pieces can be turned around an axis which is oriented in a length direction of the armrest, to change from a position where both plates are vertically oriented and in parallel, to a position where both plates are horizontally oriented.

An aspect of the the foldable armrest has the advantage to solve the perennial problem of fighting for elbowroom in high-density seating in passengers compartments.

A further advantage is to provide individual space for the arms of both persons seating at either side of the device without increasing the width of the division.

According to another aspect, the invention provides a seat or seat group for use in a seat arrangement and especially for use in a seat arrangement and/or an aircraft cabin according to any of aspects or embodiments of the invention.

The seat or each seat of the seat group preferably has a seat cushion and a left-hand armrest as well as a right-hand armrest, wherein seats that are arranged in close proximity to each other share one armrest therebetween. The armrest is preferably configured as specified above with regard to different embodiments of the aspect of the invention referring to the armrest configuration.

The seat may be one of the end seats.

The end seat may include an end seat cushion comprising a top surface as seat surface for a passenger, an external outer surface configured to face the side wall of the passenger compartment, an internal surface for facing an adjacent seat, and a lower surface to be directed downwardly.

It is preferred that an angle between at least a lower part of the outer cushion surface and the cushion top surface is smaller than 90°.

It is preferred that an angle between at least a lower part of the outer cushion surface and the cushion top surface is between 60° and 90°.

It is preferred that at least a part of the outer cushion surface is convex.

It is preferred that at least a part of the outer cushion surface is convexly curved.

It is preferred that at least a part of the outer cushion surface is curved with a radius of 150-700 cm (59" - 276"), preferably between 300-400 cm (118" - 157"), most preferred 378 cm (148").

It is preferred that the at least one end seat cushion has a trapezoidal contour with a wider top surface and a narrower lower surface.

It is preferred that the at least one end seat cushion is asymmetric.

According to another embodiment, it is preferred that the at least one end seat cushion is symmetric.

It is preferred that an angle between the external outer cushion surface and the cushion top surface is smaller than an angle between the inner cushion surface and the cushion top surface.

It is preferred that at least a part of the internal cushion surface extends in the horizontal direction.

It is preferred that the angle between at least a part of the internal cushion surface and the cushion top surface is 90°.

It is preferred that each seat of the seat group includes a seat cushion arranged between two armrests, wherein the end seats at the ends of the at least one end seat group include an end seat cushion and an end armrest to be arranged between the end seat cushion and the side wall.

It is preferred that the end seat cushion is raised with regard to seat cushions of another seat of the seat group.

A preferred seat arrangement according to an embodiment of the invention provides seats in an 11 abreast configuration, e.g. on the main deck of an aircraft such as an Airbus A380, in a 3-5-3 arrangement.

For this specific layout both the cabin lining and the seat track can be unchanged with regard to previous seat layouts. Especially, both the cabin lining and the seat track of an actual configuration in a main deck of the Airbus A380 can be used.

Preferably, there is provided an 11 abreast configuration on the main deck in a 3-5-3 arrangement with an 18" wide seat.

One possible idea relates to a maximum use of the cabin width at armrest height with special sculpturing of an outboard seat and/or an outboard armrest.

One option relates to a raise of lateral seat(s).

According to a further option, the armrest comfort can be further enhanced via innovative concepts, for example by using foldable armrests.

For example, one can optimize the lateral space usage by adapting the form of the outboard armrests to the form of the side walls or of the cabin lining. For example, the top of armrests can be placed 0.5" closer to the side wall with armrests that are not adjustable in height. For example, the top of armrests can be placed 1 " loser to the side wall with an adjustable armrest such as a foldable armrest.

Today's installation has a 1.5" margin between armrest and side wall. This margin can be reduced to 0.5" on each side.

According to another option, the lateral triples of seats is raised, e.g. by 2.1 ". This can be combined with the adaptation of the lateral contour of the end seats and/or the end armrests. For example, in A380, 3" extra width can be gained from seat raising and seat shape optimization.

Several aspects or embodiments of the invention have the advantage to place more passengers in a cabin, providing comfort for each passenger, and meeting the ergonomic requirements for passenger aircrafts.

For example, there is provided a seat arrangement for an aircraft cabin, comprising a plurality of seats arranged in a seat row; the seat row being divided into at least three groups of seats and having at least two gaps for providing an aisle in the aircraft cabin; the seat row having a total width smaller or equal 253.3 inches, preferably 252.3" at the height of the armrests; wherein at least 11 seats are arranged in the row, each seat having a width between two armrests of (at least) 18 inches, and the width of the upper side of the armrests between two seats being (at least) 1.5 inches.

According to another example, the width between the armrests of a seat can also be reduced or increased, depending on the aisle width. For example, the seat width between the armrests can be 16" to 20" with a preference of 18", and the aisle width between the armrests is between 15" and 20", preferably 17".

For example, there is provided a seat arrangement for an aircraft cabin, comprising a plurality of seats arranged in a seat row; the seat row being divided into at least three groups of seats and having at least two gaps for providing an aisle; wherein at least one seat at the outer side of the row is raised relative to another seat and/or is having an outer armrest with an inclined side surface.

Preferably, the armrests between two seats and/or at the outer side of at least one lateral seat of the seat row have at least one portion or part pivotably mounted around an axis which is oriented in the length direction of the armrest.

Preferably, the armrest is foldable.

Preferably, the upper side of the armrest of each seat has a width of (at least) 1.5 inches when the pivotably mounted portion is in the vertical position.

Preferably the width of the outer seat including its armrests is reduced (e.g. by 0.35 inches) when the pivotably mounted portion of the armrest at the outer side of the seat row is moved from the vertical into the horizontal position (to support the passenger arm at a relatively lower level).

Preferably, a width between seat cushions at two sides of the aisle gap is ≥ 20 inches.

Preferably, a width between armrests at both sides of the aisle gap is ≥ 17 inches.

A 3-5-3 seat arrangement is preferred.

Preferably, a special geometry of the outer armrest and/or the outer seat cushion is provided.

Preferably, a special shape of an armrest and/or a seat cushion is adapted to the lining of the cabin (e.g. inclined and/or curved).

Several or all seats of the lateral seat group can be raised.

For example, outer seat(s) of the row or all seats of lateral row are raised, e.g. by 2.1 inches.

For example, there is provided a seat for vehicles characterised in that it comprises at least one armrest with an external face that is at least partially inclined transversally.

Preferably, the seat comprises a cushion with at least one external face that is at least partially inclined transversally.

Preferably, the angle between the upper external face and the external transversal face of the cushion is between 60° and 90°.

Preferably, the angle between the upper external face and the external transversal face of the armrest is between 60° and 90°.

According to a preferred embodiment, the external face is more inclined than the internal face.

Further, there may be provided an aircraft cabin comprising at least one seat according to the preceding aspects wherein said inclined external face of the seat cushion and/or to said inclined external face of the armrest follow the outlines of the side wall.

Further, there may be provided an aircraft cabin comprising at least one seat according to the preceding aspects comprising a side wall approximately parallel to said inclined external face of the seat cushion and/or to said inclined external face of the armrest.

Preferably, the distance between the upper external face of the armrest and the side wall is approximately the same as the one between the upper external face of the cushion and the side wall.

A preferred embodiment relates to a seat arrangement for a main deck of an aircraft such as A380 with a new 11 abreast concept associated with new seat height, new seat with novel armrest, cushion and back rest. For example, center seats are arranged in a down position and window seats are arranged in an up position associated with at least 18 inches cushion width between armrests.

With the invention, one can find "more lateral space" to gain a few inches and/or millimeters. So, it is possible to have more seats in a row with good passenger comfort.

Preferred embodiments of the invention are described in the following in more detail with reference to the accompanying drawings.
- Fig. 1: is a schematic sectional front view of a present seat arrangement in the cabin of the aircraft A380, wherein the seat arrangement comprises a seat row divided into three seat groups in a 3-4-3 configuration;
- Fig. 2: is a schematic view as in Fig. 1 of a new cabin for the A380 aircraft with a new seat arrangement in a 3-5-3 configuration (11 abreast);
- Fig. 3: is an enlarged view of the first embodiment of the new seat arrangement with passengers;
- Fig. 4: is an enlarged view of an end seat of the seat row of the seat arrangement of Fig. 2;
- Fig. 5: is a view similar to Fig. 4 with an example for dimensions of a gap between the end seat and an end armrest of the end seat and the lining of the cabin wall as well as with dimensions of the top surface of the arm-rests of this end seat;
- Fig. 6: is a schematic view of the end seat group that includes the end seat of Fig. 4 or 5;
- Fig. 7: is a view similar to Figs. 4 and 5 explaining an adaptation of the end seat and the end armrest to the inner surface of the side wall of the cabin;
- Figs. 8, 8a, 9 and 10: are schematic sectional views through different embodiments of the end armrest for adaptation to the side wall;
- Fig. 11: is a view similar to Fig. 3 of a second embodiment of the seat arrangement wherein a second embodiment of armrests is used;
- Fig. 12: shows details of the configuration of Fig. 11;
- Fig. 13: is a schematic view of one of the end seat groups of the seat arrangement as shown in Figs. 11 and 12 for explaining different configurations of the armrests, namely end armrests, middle armrests between the seats and aisle armrests;
- Fig. 13a: is a schematic view of one of the armrests between the seats in a closed position;
- Fig. 13b: is a schematic view of one of the armrests between the seats in an open position;
- Fig. 14: is a schematic perspective view of the seat arrangement with the armrest in the closed position in use by passengers;
- Figs. 15-19: are views similar to Fig. 13 without the passengers for showing different steps of deployment of the armrest between a closed position as shown in Fig. 15 and an open position as shown in Fig. 19;
- Fig. 20: is a view similar to Fig. 19 with the armrest in an open position in use by passengers;
- Fig. 21: shows two schematic views of one of the end seat group of the cabin of the aircraft A380 as example for a passenger compartment explaining a further embodiment of a new seat arrangement;
- Fig. 22: is a schematic front view of the third embodiment of the seat arrangement as explained in Fig. 21 wherein one end seat group and a middle seat group are shown;
- Fig. 23: shows one entire seat row of the third embodiment of the seat configuration; and
- Fig. 24: shows a front view and a top view of a fourth embodiment of a new seat arrangement in a cabin of an A380 aircraft; and
- Fig. 25: shows one of the end seat groups of the fourth embodiment of the seat arrangement.

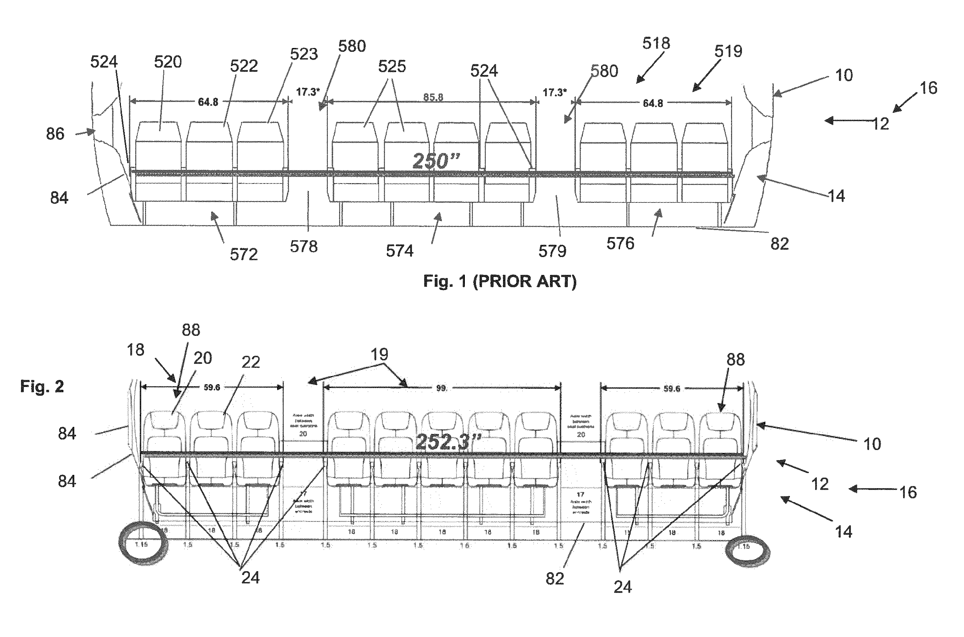

Fig. 1 shows a front view of a cabin 10 of an A380 as example of an aircraft 12, wherein the cabin 10 is an example for a passenger compartment 14 of a vehicle. Fig. 1 shows a present configuration of a seat arrangement 518. The known seat arrangement 518 has several seats 520, 522, 523, 525 with armrests 524. Each seat 520, 522, 523, 525 has an armrest 524 on the left-hand side and an armrest 524 on the right-hand side.

The seat arrangement 518 comprises at least one seat row 519. The seats of the seat row 519 are divided into three seat groups 572, 574, 576 with gaps 578, 579 for forming aisles 580 between the seat groups 572, 574, 576.

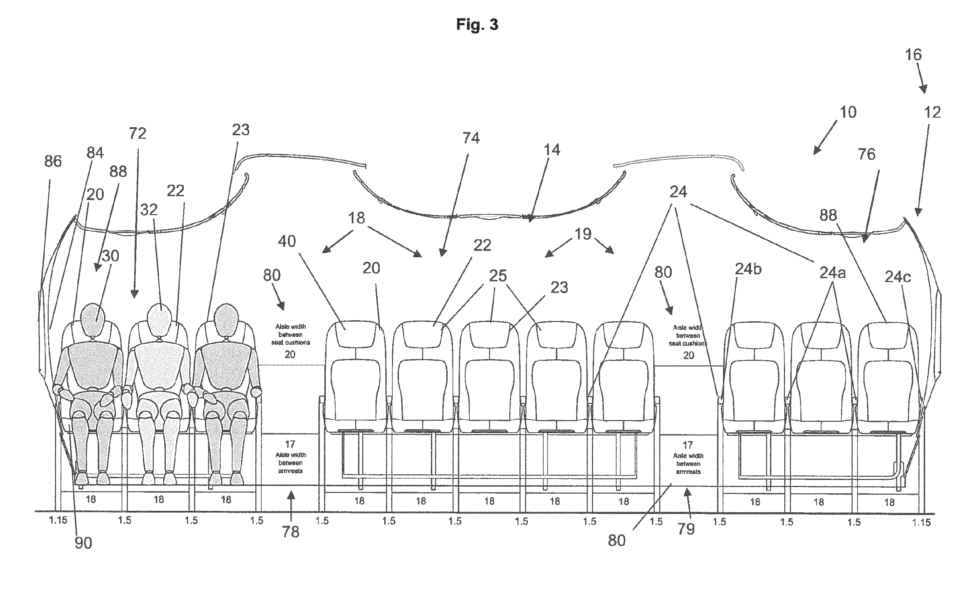

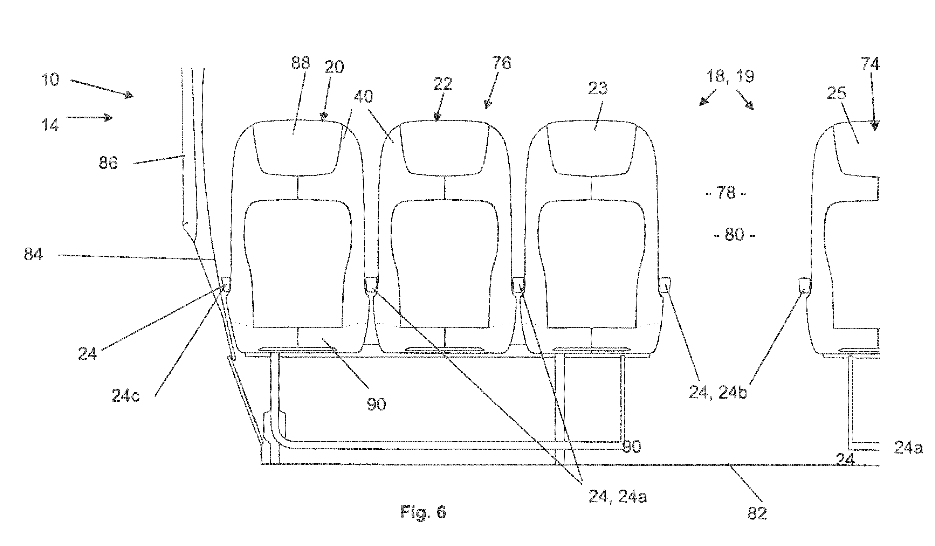

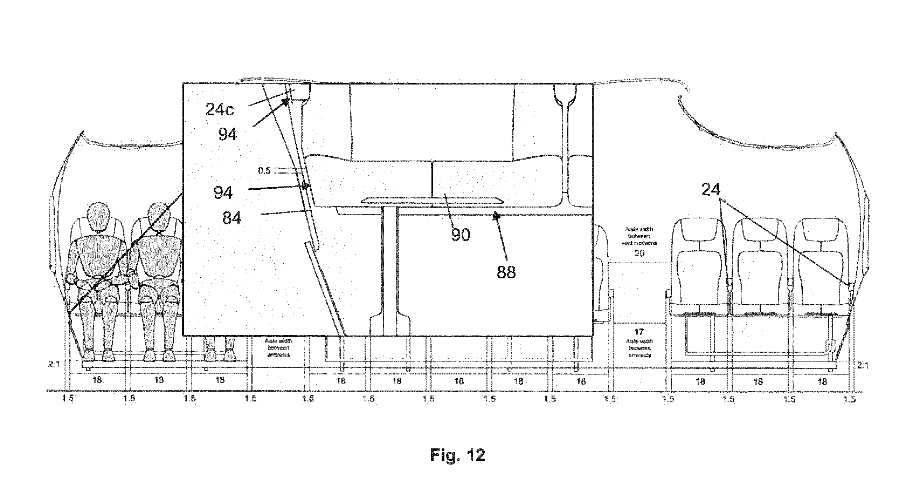

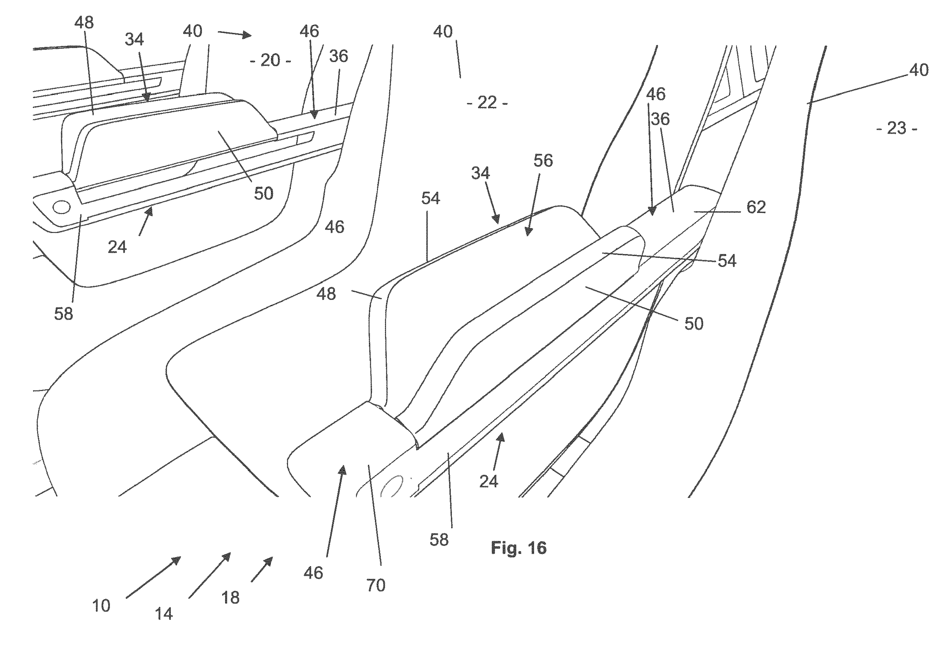

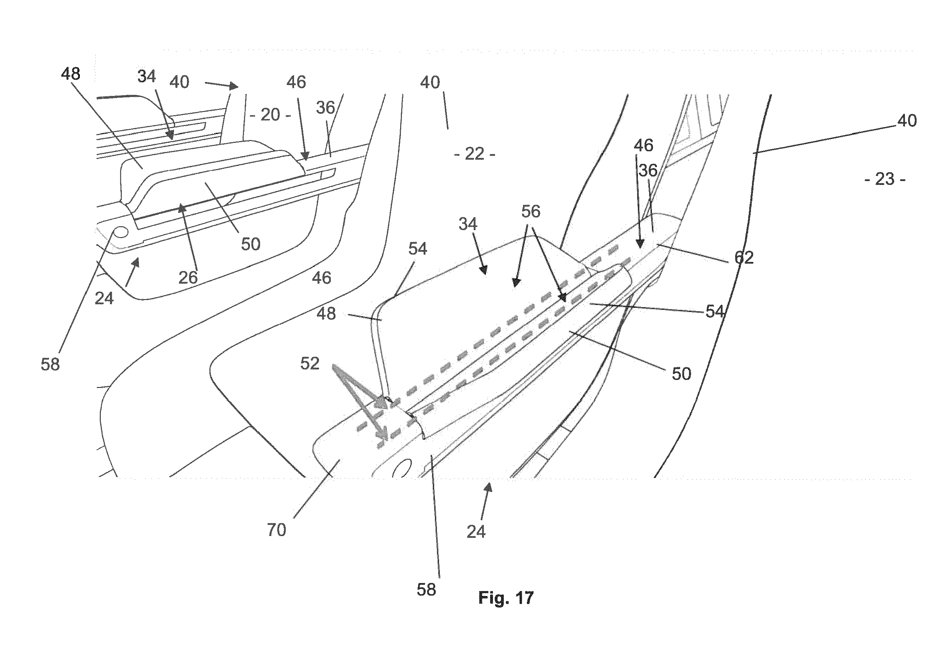

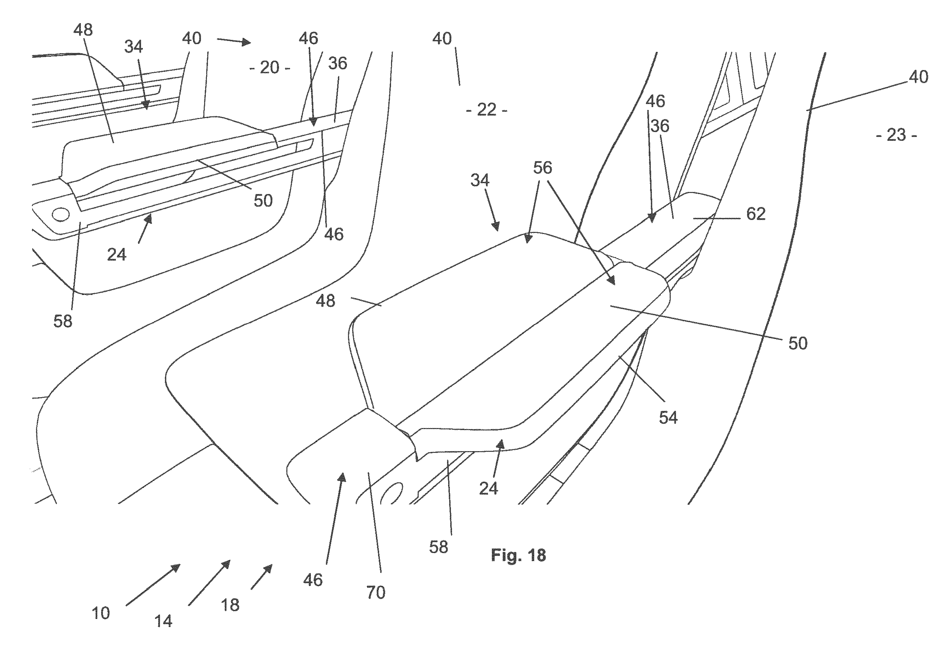

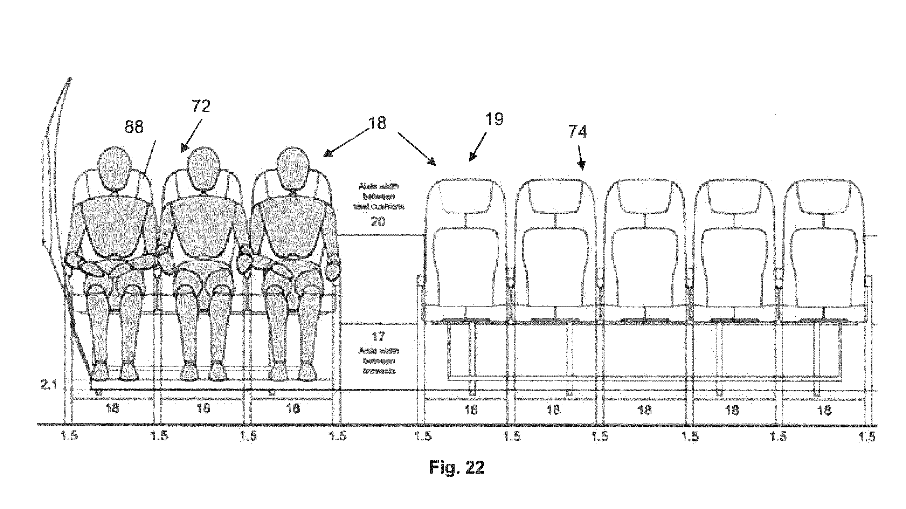

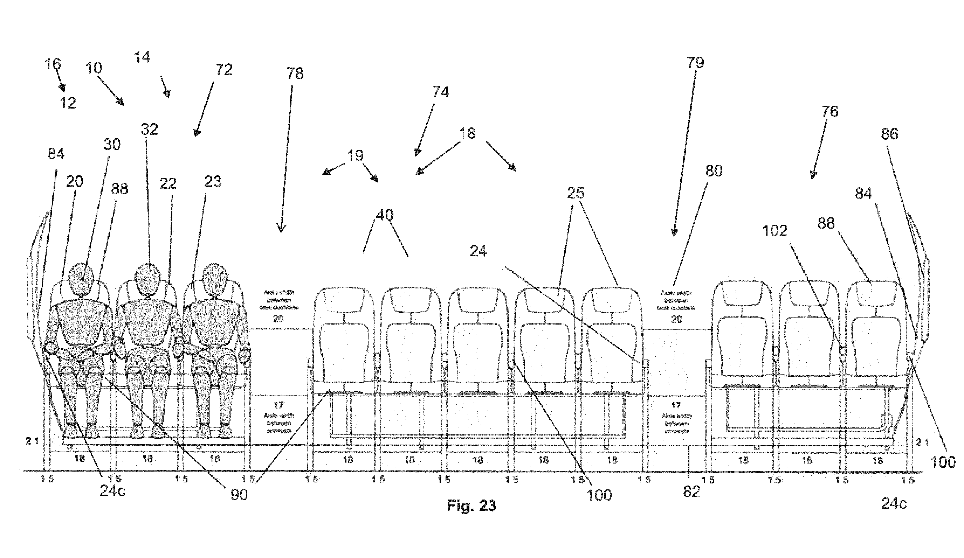

The cabin 10 of the A380 aircraft 12 which is shown in Fig. 1 with a known seat arrangement 518 and which is shown in the remaining Figs. 2 to 24 with several embodiments of new seat arrangements 18 has a floor 82 and concavely curved side walls 84. Hence, the width of the passenger compartment 14 is smaller at floor level and gradually increases for higher levels and is relatively large in a middle level, for example in the region of the cabin windows 86.

As usual in this technical field of aircraft cabin equipment, all linear dimensions are indicated in inches; especially all linear dimensions given in the figures are indicated in inches. This can be easily converted into the metric system wherein 1 inch corresponds exactly to 2.54 cm.

Referring to Fig. 1 the present usual seat arrangement 518 of a main deck (economy class) of an A380 has a 10 abreast configuration wherein 10 seats are arranged in the seat row 519. As visible from Fig. 1, the end groups 572, 576 have three seats 520, 522, 523 while the middle seat group 574 has four seats 525. All armrests 524 of the known seat arrangement 518 have the same shape and same configuration and provide a support surface with a width of 2 inches. Especially, the armrests 524 are rectangular in cross section. The known seat arrangement 518 has, measured in the height level of the armrests 524, a total width (including the armrests 524) of 250 inches while the gaps 578, 579 when measured on armrest level have 17.3 inches. A seat width between the armrests 524 is 18.9 inches.

Figs. 2 to 24 show different embodiments of a new seat arrangement 18 with 11 seats 20, 22, 23, 25 in a seat row 19 in the cabin 10 of an A380 wherein the configuration of the side walls 84 and also the configuration of seat tracks for fixation of the seat groups 72, 74, 76 remain unchanged.

Nevertheless, a relatively large width between the armrests 24 of 18 inches is provided in the new seat arrangement 18.

Figs. 2 to 24 show a schematic view of a part of the interior of the cabin 10 of an aircraft 12 as an example for a passenger compartment 14 of a vehicle 16, comprising the seat arrangement 18. The Figs. 2 to 24 show, as example, the seat arrangement 18 for a main deck (economy class) of the aircraft A380.

The seat arrangement 18 comprises at least one seat row 19 having several seats 20, 22, 23, 25 in an 11 abreast configuration. Any of the seats 20, 22, 23, 25 has armrests 24 both on the left-hand side and on the right-hand side.

The seat row 19 is divided into three groups, namely a first end seat group 72, a middle seat group 74 and a second end seat group 76 with gaps 78, 79 to form aisles 80 therebetween.

The seat groups 72, 74, 76 are fixed on seat tracks (not shown) on the floor 82 between the concavely curved side wall 84 of the passenger compartment 14. The cabin 10, the side walls 84, the floor 82 with seat tracks remain the same as in the known seat configuration shown in Fig. 1.

The end seat groups 72, 74 each have three seats 20, 22, 23 wherein a first seat 20 is arranged near the side wall 84 and forms an end seat 88 of the seat row 19 and the seat arrangement 18.

The armrests 24 have different configuration depending on their position. Between two seats 20, 22 and 22, 23, respectively, of the same seat group 72 a dual user armrest or middle armrest 24a is provided. On the seats near an aisle 80, an aisle armrest 24b is provided. And between each of the end seats 88 and the side wall 84, there is an end armrest 24c mounted to this end seat 88. The middle armrest 24a and the aisle armrest 24b have a minimum width of 1.5 inches. The top surface 92 of the end armrests 24c have a width of 1.15 inches.

The gap 78, 79 for forming the aisles 80 is at least 20 inches when measured between the backrests 40 or the cushions 90 of the seats 20, 22, 23, 25 and is at least 17 inches when measured between the armrests.

The normal height level of the top surface of the armrests 24 is 25 inches. The width of the seats 20, 22, 23, 25 between the armrests 24 is 18 inches.

The Figs. 2 to 24 show different seat arrangements for enabling an 11 abreast configuration with the previously mentioned width dimensions so that a total width of the seat row 19 of the seat arrangement 18 when measured on the level of the top surfaces of the armrests 24 is 252.3 inches so that these 11 seat configuration with relatively large width between the armrests 24 fits into the cabin 10 of an A380 aircraft.

In the first and second embodiments as shown in Figs. 2 to 20, this configuration can be achieved just by sculpturing of the armrests 24, especially the end armrests 24c, and/or of the outer contour of the end seats 88.

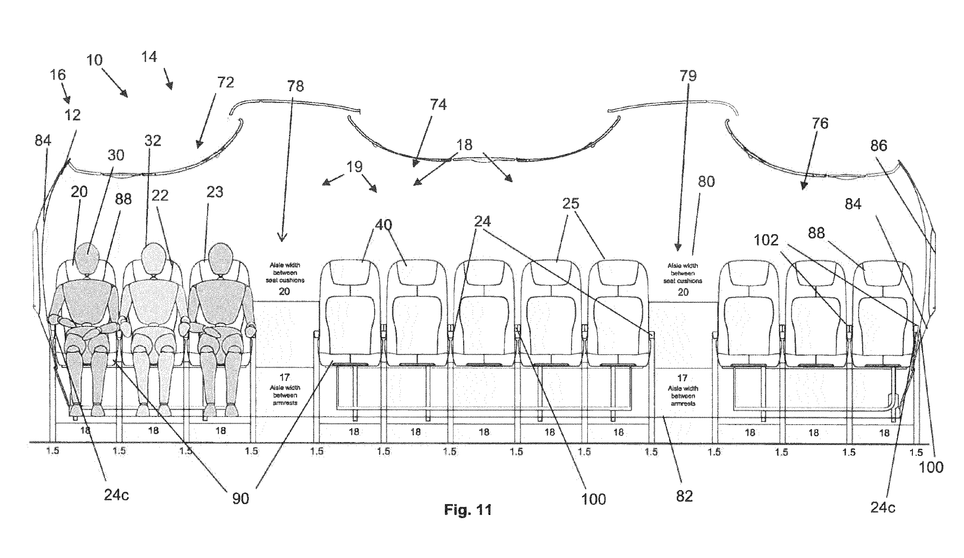

In the first embodiment as shown in Figs. 2 to 10, the top surface 92 of all armrests 24 is provided throughout the entire use at the same height level. In contrast to this, the second embodiment as shown in Figs. 11 to 20 provides armrests 24 that are adjustable in height and/or in width.

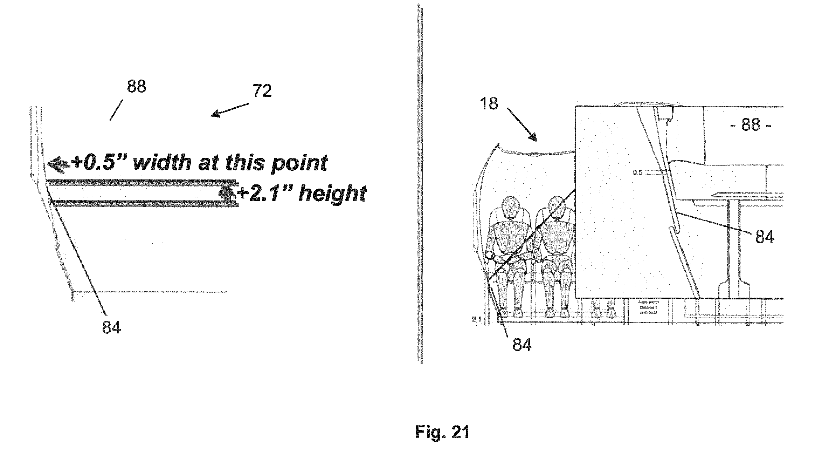

The third and fourth embodiment of the seat arrangement 18, as shown in Figs. 21 to 25, can use standard forms of armrests 24. More space in the width direction between the side walls 84 can be provided by raising at least one of the seats of the end seat groups 72, 76. Of course, it is also possible to combine the idea of armrest and/or end seat sculpturing with the idea of raising at least one of the seats 88 of the end groups 72, 76.

In the following, the idea of sculpturing the outer contour of armrests 24c and/or of end seats 88 and/or of the cushions 90 of the end seats 88 is explained in more detail with reference to Figs. 2 to 20.

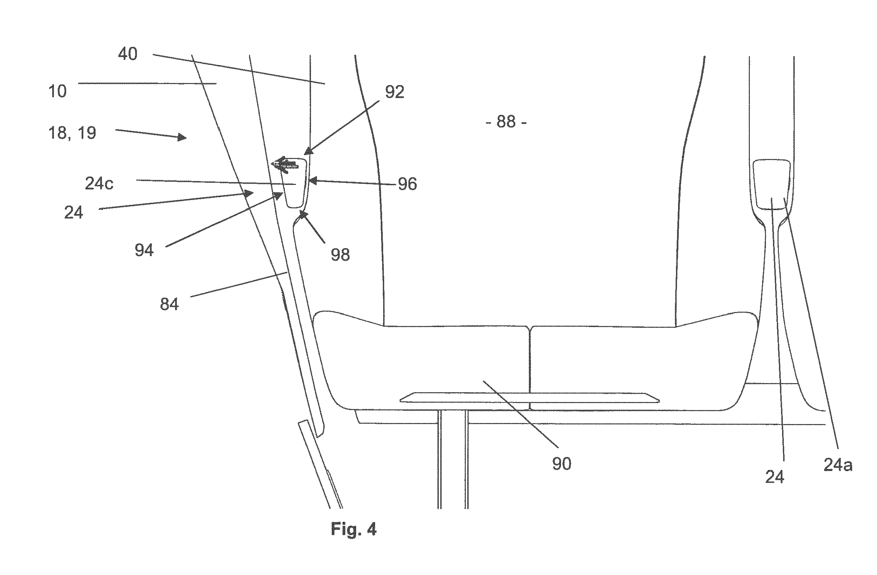

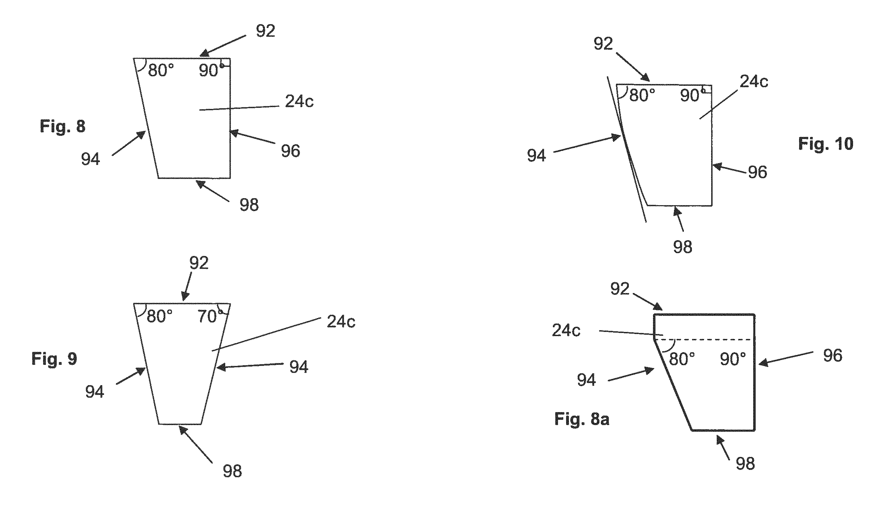

The end armrest 24c has, at least in one position thereof, a top surface 92 with a width of 1.15 inches. The maximum width of the end armrest 24c is in the height of this top surface 52. As visible from Figs. 4 to 7, and especially in Figs. 8 to 10, the end armrest 24c has a top surface 92, an external outer surface 94, an internal surface 96 and a lower surface 98.

The top surface 92 is configured to support an arm 35 of a passenger 30. The external outer surface 94 is configured to face the side wall 84 of the passenger compartment 14. The internal surface 96 is configured to face the center of the associated end seat 88. The lower surface 98 is directed, in normal use of the end armrest 24c, to face the floor 82. The outer surface 94 is adapted to the contour of the adjacent portion of the side wall 84.

Hence, the outer surface 94 is not directed exactly in the vertical direction, but is inclined so that a lower part thereof is closer to the center of the end seat 88 as compared with a higher part thereof. At least a part of the outer surface 94 is inclined or curved.

Figs. 8 to 10 show different possible cross sections for an end armrest 24c. In all embodiments, an angle between the top surface 92 and at least a part of the outer surface 94 is lower than 90°, and especially within a range between 90° and 60°. In the example as given in Figs. 8, 9, and 10, the angle between the top surface 92 and the upper edge part of the outer surface 94 is about 80°. As visible from Fig. 8a, an inclined part of the outer surface 94 can be combined with a vertical part of the outer surface 94. For example, an upper part of the outer surface 94 is vertical and a lower part of the outer surface is inclined.

The internal surface 96 can be directed in a vertical direction. It is also possible that this internal surface 96 is inclined in a similar way as the outer surface 94. The embodiments of Fig. 8, 8a, and 10 show examples with a vertical internal surface 96, while the embodiment of Fig. 9 shows an example with an inclined internal surface 96 with an angle of 70° between the top surface 92 and the internal surface 96.

Hence, the cross section of the end armrest 24c can have a shape of a trapeze with a smaller width at the lower surface 98 and a larger width at the top surface 92.

As also indicated in Fig. 10, it is also possible that the outer surface 94 is curved. Preferably, the curvature follows a corresponding curvature of the side wall 84. In a further embodiment (not shown) a lower part of the outer surface 94 has such a curvature while an upper part of the outer surface 94 is vertical, similar as this is shown in Fig. 8a for the inclined version.

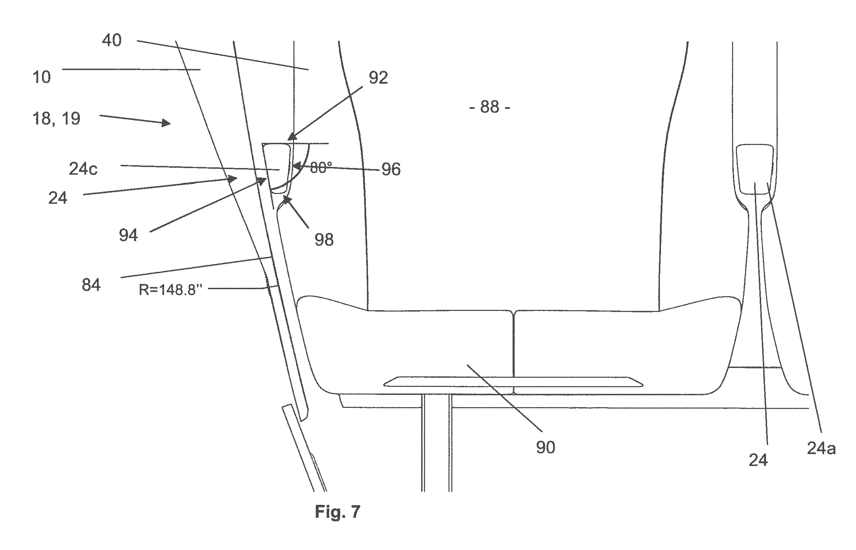

For example, the inner lining of the side wall 84 of the cabin 10 of an A380 has a radius of 148.8 inches (Fig. 7); the corresponding part of the outer contour of the end seat 88 including the cushion 90, the back rest 40 and the armrest 24c may have a similar curvature.

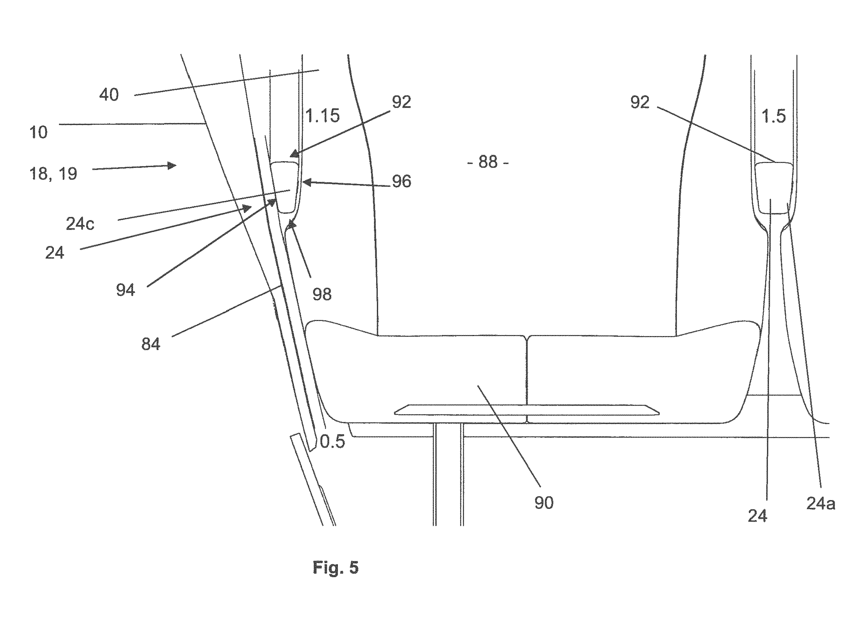

It is preferred to have at least a gap of 0.5 inches between the side wall 84 and the end seat 88, as indicated in Fig. 5. Hence, a curvature of a curved outer contour of the end seat 88 and/or the end armrest 24c has preferably a corresponding radius; however, in a convex curvature and not a concave curvature as this is the case for the side wall 84.

By adapting the outer contour of the end armrest 24c and/or of the end seat 88, the whole outer end seat group 72 may be placed closer to the side wall 84 which gives space for an additional seat, when compared with the present seat arrangement 518.

Figs. 2 to 10 show a first embodiment where the armrests 24 have a top surface 92 which is always in the same height level in use.

Of course, the armrest 24 can be mounted to the seats 20, 22, 23, 25 so that they can be pivoted about an axis parallel to the back rest from the generally horizontal position as shown in the figures to an upward position, as this is well-known for standard armrests 524.

The armrests 24 of the first embodiment have just one base body 58, the form of which cannot be altered.

In contrast to this, the second embodiment of the seat arrangement 18 as shown in Figs. 11 to 21 has armrests 24 with an adjustable support portion 100. Especially, the armrests 24b, 24c are foldable and have at least one movable part 102.

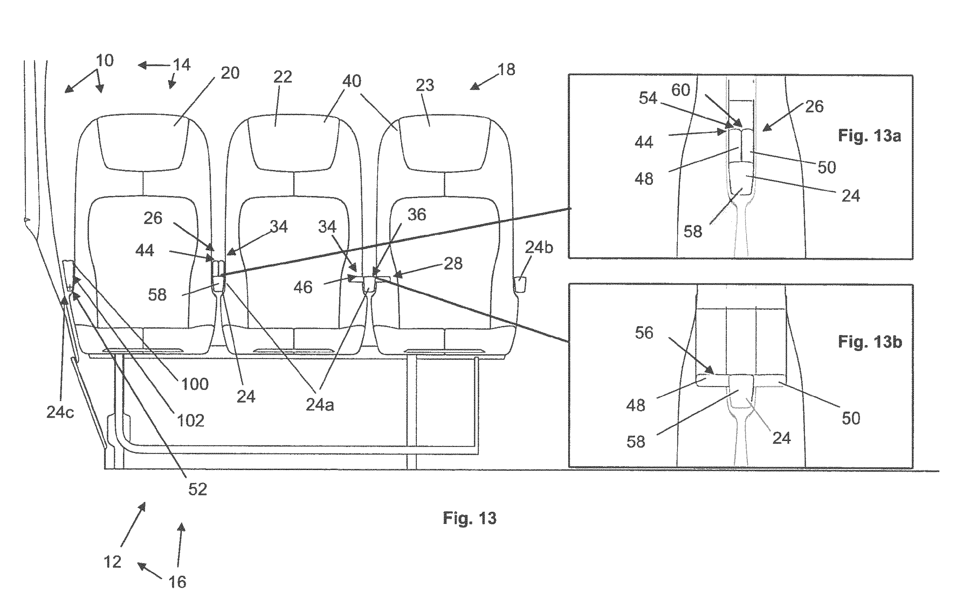

In the following, first, a possible adjustment of the middle armrests 24a is explained in more detail with reference to Figs. 13 to 20.

In Fig. 13, the middle armrest 24a between a first seat 20 and a second seat 22 is shown in a closed position 26. The armrest 24a between the second seat 22 and the third seat 23 is shown in an open position 28. The closed position 26 is shown in more detail in Fig. 13a, while the open position 28 of the armrest 24 is shown in more detail in Fig. 13b.

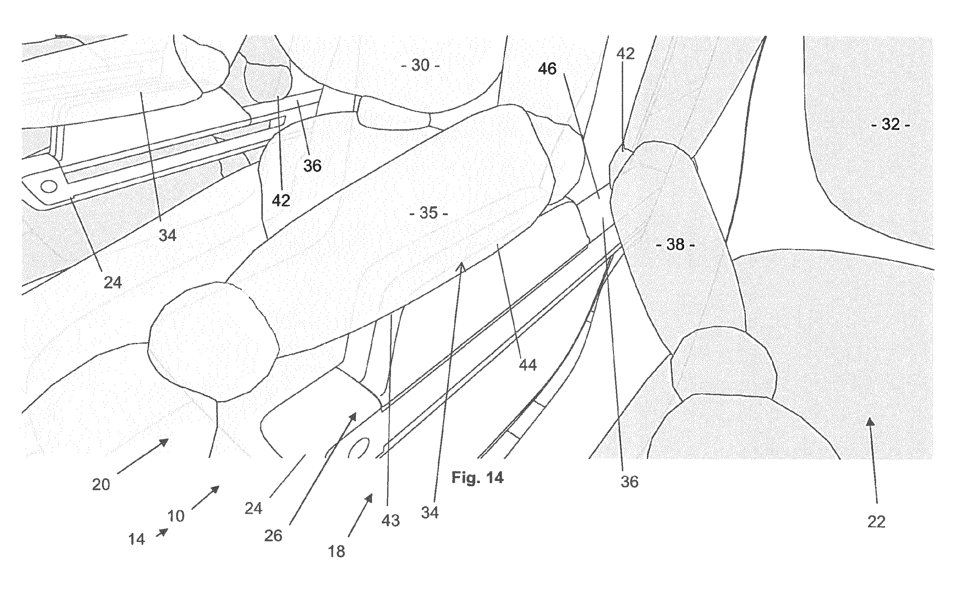

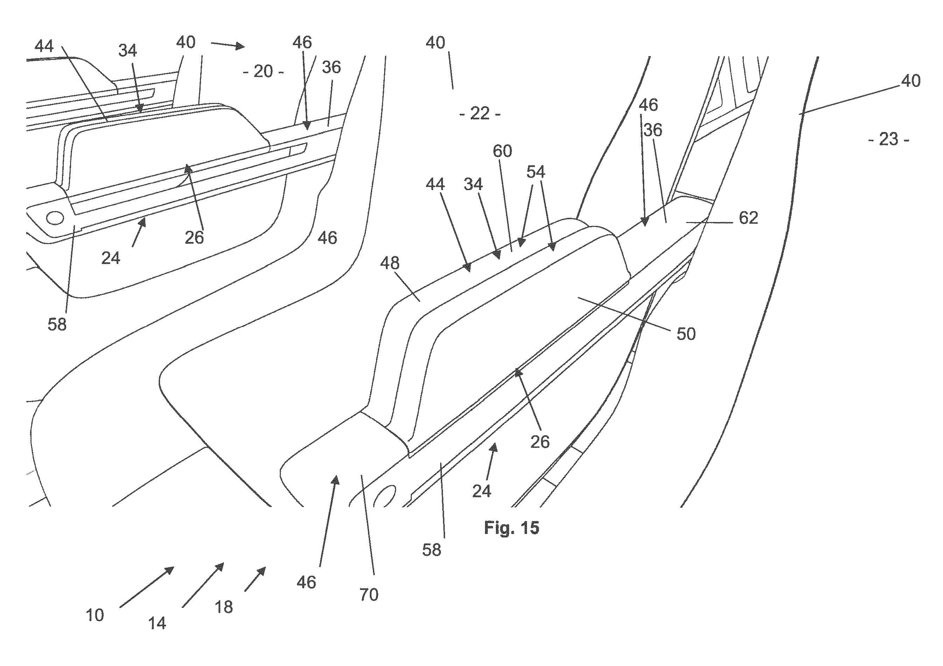

The middle armrest 24a in the closed position is shown in more detail in Figs. 14 and 15. Fig. 14 shows the situation when the seat arrangement 18 is occupied by neighbouring passengers 30, 32. Fig. 15 shows the seat arrangement 18 with the foldable armrests 24 between the seats 20, 22; 22, 23 in the closed position 26 without passengers.

As visible from Figs. 14 and 15, the foldable middle armrest 24a provides a first portion 34 for supporting the arm 35 of the first passenger 30 and a second support portion 36 for supporting the arm 38 of the neighbouring second passenger 32.

The second support portion 36 is a backward portion that is arranged closer to the back rests 40 of the seats 20, 22, 23, while the first support portion 34 is arranged on a more forward portion or front portion. The support portions 34, 36 are arranged one after another in longitudinal direction of the armrest 24a. The second support portion 36 is located between the first support portion 34 and the back rest 40.

The first support portion 34 has, at least in the closed position 28, a different height level as the second support portion 36. In the embodiment shown, the first support portion 34 which is more forward has a higher level as the second support portion 36.

Further, the foldable middle armrest 24a has a tip portion 70 at the free forward end having preferably the same height level as the second support portion 36.

As visible from Fig. 14, the second passenger 32 can support his elbow 42 on the second support portion 36, while the first passenger 30 can rest his forearm 43 on the first support portion 34.

The first support portion 34 is adjacent to the second support portion 36 and both support portions 34, 36 do not overlap.

The first support portion 34 is longer than the second support portion 36.

Hence, while the dual-user middle armrest 24a is quite narrow and takes only a small space between the seats 22, 23; 20, 22, it provides two different height levels 44, 46 which give more space for the arms 35, 38 of the passengers 30, 32.

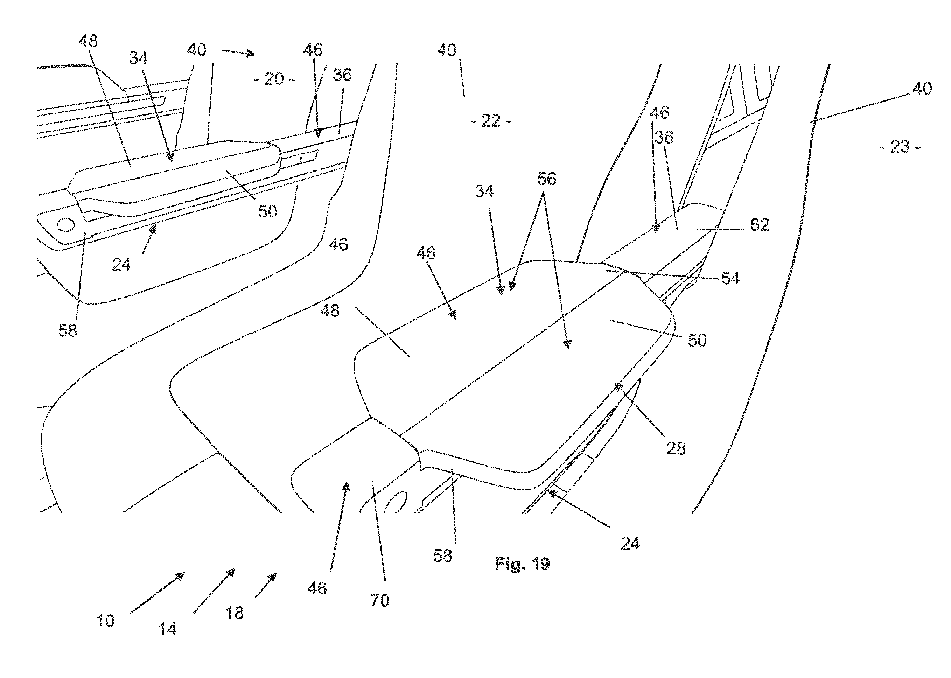

As visible from Figs. 14 to 19, the foldable middle armrest 24a can be unfolded from the closed position 26 as shown in Fig. 14 into an open position 28 as shown in Fig. 19; intermediate positions are shown in Figs. 15 to 18.

In the open position 28, the first support portion 34 has the same height level 46 as the second support portion 36, but has a larger width.

As visible from Figs. 14 to 19, the first support portion 34 comprises a first wing or lid 48 and a second wing or lid 50. The lids 48, 50 are pivotally movable about parallel pivot axes 52 extending into the longitudinal direction of the armrest 24a.

It is also possible that both lids 48, 50 are formed and arranged in a way that they have only one common axis 52 for their pivot movement or that only one of the lids 48, 50 is pivotally movable about one single axis 52. In the latter case, only one of the lids 48, 50 can be opened and thus moved in the horizontal position, while the remaining lid remains in the vertical position and thus provides privacy between the passengers.

Both lids 48, 50 have a narrower first arm support surface 54 arranged on the smaller side of the lid 48, 50 and extending, hence, in a tangential direction with regard to the pivot axis 52. Further, both lids 50 have a wider second arm support surface 56 on the wider surface of the lid 48, 50.

The at least one axis 52 for the pivot movement of the lids 48, 50 is arranged in the bottom portion of the lids 48, 50 when they are in the closed or vertical position. That means, during unfold movement into the open or horizontal position, the lids 48, 50 and in particular the surfaces 54 at the lateral end of each lid 48, 54 being on the opposite side of the one or two axes 52 move downward.

Both lids 48, 50 are plate-shaped members pivotally linked to a base body 58 of the armrest 24 on one of the edges thereof while the first arm support surface 54 is located on the second, free-edge of the lid 48, 50. The second arm support surface 56 extends parallel to a radial direction with regard to the pivot axis 52.

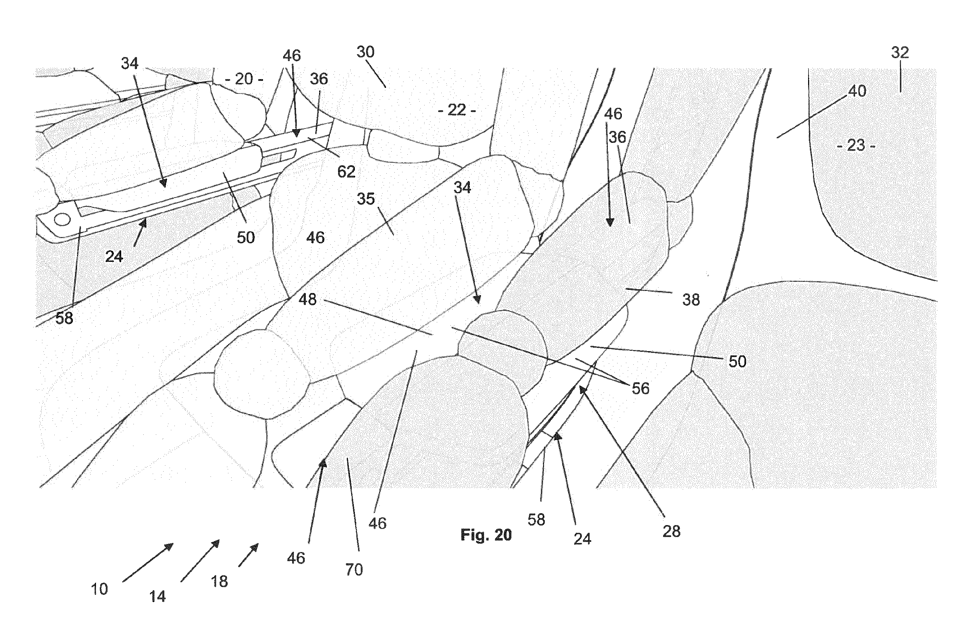

In the closed position 26, both first arm support surfaces 54 of the two lids 48, 50 form together a first platform 60 having the upper height level 44 of the first support portion 34. In the open position 28, any second arm support surface 56 can be used by the respective passenger 30, 32, as shown in Fig. 20. In the unfolded position (open position 28), both second arm support surface 56 provide a much wider arm support surface in the lower height level 46. Preferably, the lower height level 46 of the first support portion 34 has the same height level as the second support portion 36.

The distance between the surfaces 54 of the two lids 48, 50 in the open position, i.e. the width of the support surface 56, is larger than the width of the second support portion 36.

As further visible from Figs. 14 to 19, the lids 48, 50 are configured symmetrically with regard to a central longitudinal plane through the armrest 24. Both lids 48, 50 can be pivoted in a counter-rotating manner around their respective pivot axis 52.

In the second embodiment of the seat arrangement 18, not only the middle armrests 24a have an adjustable support portion 100; but also the end armrests 24c have a corresponding adjustable portion 100 with a movable part 102 that is pivotally movable about an axis 52 indicated in Fig. 13.

Figs. 11 and 13 show the end armrest 24c in the unfolded position so that the top surface 92 provides the first support portion 34 in an upper height level 44. By pivoting the movable part 102 about the access 52, the movable part 102 can be pivoted inwardly, and the outer surface 94 can be used as second arm support surface 56.

As easily visible from Figs. 11 and 13, the foldable end armrest 24c of the second embodiment provides a larger width of the end seat 88, and hence, a larger width of the whole seat row 19 of the seat arrangement when being in the upright position and a smaller width in the lower position. Thus, the space provided by the concave curvature of the side wall 84 is used in an optimized way as space for the end armrest 24c.

In the third embodiment as shown in Figs. 21 to 23, all three seats 20, 22, 23 of the end seat groups 76, 72 are raised by 2.1 inches when compared to the height level of the middle seats 25 of the middle seat group 74.

In this higher level, 0.5 more width is provided on both ends. Hence, the whole end seat groups 72, 76 can be placed more outward when compared with the known seat arrangement 518, so that, in the end, at least one more seat having a relatively large seat width can be provided.

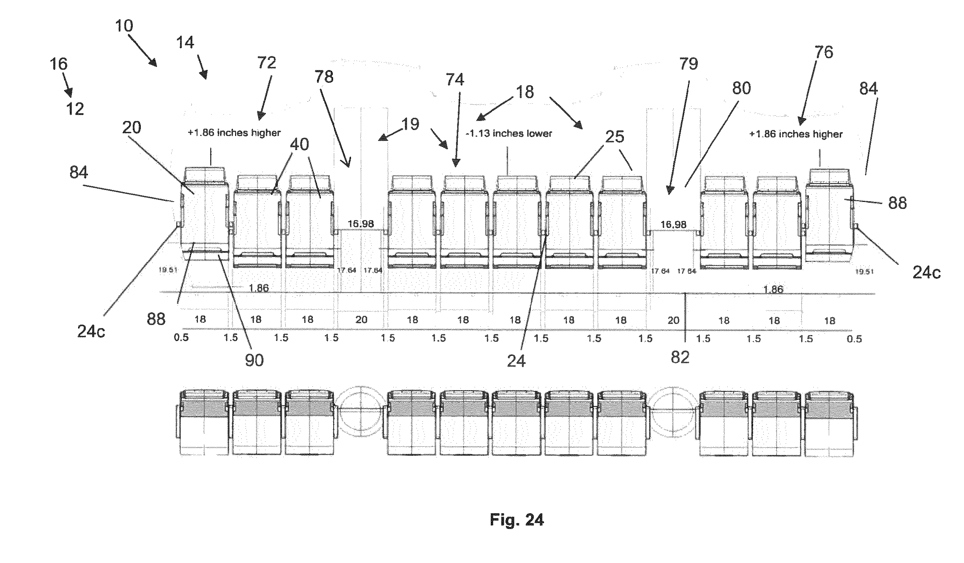

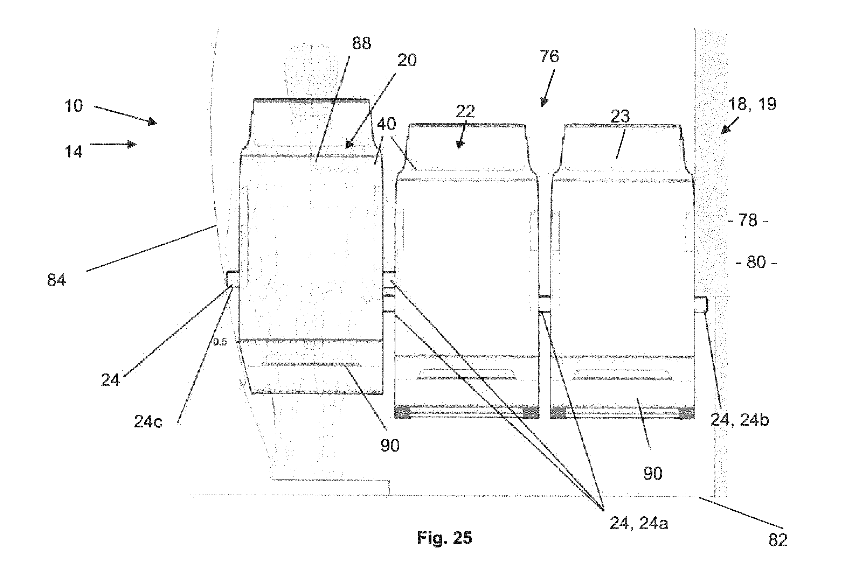

The fourth embodiment shown in Figs. 24 and 25 are similar to this third embodiment, however, not all seats 20, 22, 23 of the end seat groups 72, 76 are raised, but only the end seat 88, 20 or - in a further embodiment (not shown) eventually two of the seats 20, 22, 23 of the end groups 72, 76 are raised. This also provides more width to be used for an additional seat.

Of course, the idea of raising one or more of the seats of the end seat groups 72, 76 can be combined with the idea of sculpturing the end armrests 24c and/or the end seats 88 to gain more width for the passengers.

Several embodiments of different seat arrangements 18 have been described using as example a cabin 10 of an Airbus A380. Of course, the ideas of the new seat arrangements 18 are not restricted to this kind of airplane, but can be also used in different aircrafts and also in other vehicles.

Especially, adapted end armrests 24c and/or adapted end seats 88 can be manufactured for different cabins 10 by adapting the outer contour thereof to the contour of the inner side walls 84.

This contour can be different in different seat rows 19 and the armrests 24c and/or the end seats 88 in different seat rows 19 can also be different.

For manufacturing the end armrests 24c, first, the contour of the side walls 84 is detected, and then, the outer surface 94 of the end armrest 24c is shaped or formed correspondingly. The same applies to the outer contour of the cushions 90 and/or the back rests 40 of at least the end seats 88.

### List of Reference Signs

- 10: cabin
- 12: aircraft
- 14: passenger compartment
- 16: vehicle
- 18: seat arrangement
- 19: seat row
- 20: first seat
- 22: second seat
- 23: third seat
- 24: armrest
- 24a: middle armrest
- 24b: aisle armrest
- 24c: end armrest
- 25: middle group seat
- 26: closed position
- 28: open position
- 30: first passenger
- 32: second passenger
- 34: first support portion
- 35: arm (first passenger)
- 36: second support portion
- 38: arm (second passenger)
- 40: back rest
- 42: elbow
- 43: forearm
- 44: upper height level
- 46: lower height level
- 48: first lid
- 50: second lid
- 52: pivot axis
- 54: first arm support surface
- 56: second arm support surface
- 58: base body of the armrest
- 72: seat group
- 74: middle seat group
- 76: end seat group
- 78: gap for aisle
- 79: gap for aisle
- 80: aisle
- 82: floor
- 84: side wall
- 86: window
- 88: end seat
- 90: cushion
- 92: top surface
- 94: outer surface
- 96: internal surface
- 98: lower surface
- 100: adjustable support portion
- 102: movable part

- 518: seat arrangement
- 519: seat row
- 520: first seat
- 522: second seat
- 523: third seat
- 524: armrest
- 525: middle group seat
- 572: left-hand end seat group
- 574: middle seat group
- 576: right-hand end seat group
- 578: gap for aisle
- 579: gap for aisle
- 580: aisle

## Claims

1. Seat arrangement (18) for a passenger compartment (14) of a vehicle (16) wherein the passenger compartment (14) has a floor (82) and concave side walls (84) so that the passenger compartment (14) has a narrower width in the lower height level (46) of the floor (82) and a larger width in a medium height level, wherein the seat arrangement (18) comprises a plurality of seats (20, 22, 23) arranged in at least one seat row (19) with at least one gap (78, 79) to form an aisle (80) between at least two of these seats (20, 22, 23) wherein an armrest (24) is arranged both on the left-hand side and on the right hand side of each seat (20, 22, 23) with an end armrest (24c) arranged on each of the both ends of the seat row (19),
**characterized in that**
a) the width of the at least one seat row (19) including the end armrests (24c) when measured in a height level of the top surface (92) of the end armrests (24c) is larger as compared to the width of the at least one seat row (19) including the end armrest (24c) when measured in a height level of a lower part of the end armrests (24c); and/or
b) at least one of the end armrests (24c) and/or at least one of the end seats (88) are arranged in a higher height level when compared with a middle armrest (24a) or a middle seat, respectively.

2. Seat arrangement (18) according to claim 1,
**characterized in that** the seat arrangement (18) is configured as a seat arrangement (18) for an aircraft cabin (10); and
**in that** the seat row (19) is divided into at least three groups of seats (20, 22, 23) and having at least two gaps (78, 79) for providing aisles (80) in the aircraft cabin (10).

3. Seat arrangement (18) according to claim 2,
**characterized in that** the seat row (19) has a total width smaller or equal 253.3 inches, preferably 252.3", at the height of the top surface (92) of the end armrests (24c);
**in that** at least 11 seats (20, 22, 23) are arranged in the at least one seat row (19), wherein each seat (20, 22, 23) has a width between two armrests (24) of at least 18 inches,
and wherein the width of the upper side of the armrests (24) between two seats (20, 22, 23) is at least 1.5 inches.

4. Seat arrangement (18) according to claim 2 or 3,
**characterized by** at least one, several or all of the following features:
4.1 at least one seat (20, 22, 23) at the outer side of the row is raised relative to another seat (20, 22, 23);
4.2 at least one seat (20, 22, 23) at the outer side of the row is having an outer armrest or end armrest (24c) with an inclined side surface or an at least partially inclined side surface;
4.3 the at least one seat row (19) is divided into three groups wherein outer end groups at the ends of the seat row (19) comprise three seats (20, 22, 23) and a middle group (74) between the end groups (76) comprises five seats;
4.5 a width of the gaps (78, 79) between seat cushions (90) of the seats (20, 22, 23) is at least 20 inches; and/or
4.6 a width of the gaps (78, 79) between armrests (24) is at least 17 inches.

5. Seat arrangement (18) according to any of the preceding claims, **characterized in that**
the end armrests (24c) and/or at least one of a middle armrest (24a) between two seats (20, 22, 23) have at least one adjustable support portion (100) for supporting an arm (35, 38) of a passenger (30, 32) wherein the at least one adjustable support portion (100) is adjustable in height and/or in width.

6. Seat arrangement (18) according to claim 5,
**characterized by** at least one, several or all of the following features:
6.1 an outer edge of the at least one adjustable supporting portion (100) of the end armrest (24c) has a larger distance from a center of the associated seat (88) in an upper position and smaller distance from the center of the associated seat (88) in a lower position;
6.2 the at least one adjustable supporting portion (100) comprises at least one movable part (102) being pivotally movable in an upward position to enlarge the height of the supporting portion (34, 36) and in a downward position to lower the height of the support portion (34, 36);
6.3 the at least one adjustable supporting portion (100) comprises at least one movable part (102) being pivotable around a pivot axis (52) wherein at least a direction component of the axis direction is oriented in longitudinal direction of the armrest (24);
6.4 the upper side of the adjustable support portion (100) of the armrests (24) of each seat (20, 22, 23) has a width of at least 1.5 inches when being in the upper position; and/or
6.5 the width of the outer seat including its armrests (20, 22, 23) is reduced, preferably by 0.35 inches, when a pivotably movable part (102) of the armrest (24) at the outer side of the seat row (19) is moved from a vertical into a horizontal position.

7. Seat arrangement (18) according to any of the preceding claims, **characterized in that** the armrests (24) arranged between two seats (20, 22, 23) of the seat row (19) and/or of a seat group (72) of the seat row (19) comprise at least one first support portion (34) for an arm (35) of a first person and at least one second support portion (36) for an arm (38) of a second person wherein the first and second support portions (34, 36) provide different height levels (44, 46).

8. Seat arrangement (18) according to any of the preceding claims, **characterized in that** at least one of the end armrests (24c) comprises a top surface (92) for supporting an arm (35, 38) of a passenger,
an external outer surface (94) configured to face the side wall (84) of the passenger compartment (14),
an internal surface (96) for facing the center of the associated seat (20, 22, 23), and
a lower surface (98) to be directed downwardly, and further **characterized by** at least one of the following features:
8.1 an angle between at least a lower part of the outer surface (94) and the top surface (92) is smaller than 90°;
8.2 an angle between at least a lower part of the outer surface (94) and the top surface (92) is between 60° and 90°;
8.3 at least a part of the outer surface (94) is convex;
8.4 at least a part of the outer surface (94) is convexly curved;
8.5 at least a part of the outer surface (94) is curved with a radius of 150-700 cm (59" - 276"), preferably between 300-400 cm (118" - 157"), most preferred 378 cm (148");
8.6 the at least one end armrest (24c) has a trapezoidal contour with a wider top surface (92) and a narrower downwardly directed surface;
8.7 the at least one end armrest (24c) is asymmetric or symmetric;
8.8 an angle between the external outer surface (94) and the top surface (92) is smaller than an angle between the inner surface and the top surface (92); and/or
8.9 at least a part of the internal surface (96) extends in the horizontal direction and/or the angle between at least a part of the internal surface (96) and the top surface (92) is 90°.

9. Seat arrangement (18) according to any of the preceding claims, **characterized in that** at least one of the end seats (88) includes an end seat cushion (90) comprising
a top surface (92) as seat surface for a passenger (30, 32),
an external outer surface (94) configured to face the side wall (84) of the passenger compartment (14),
an internal surface (96) for facing an adjacent seat (20, 22, 23), and
a lower surface to be directed downwardly, and further **characterized by** at least one of the following features:
9.1 an angle between at least a lower part of the outer surface (94) and the top surface (92) is smaller than 90°;
9.2 an angle between at least a lower part of the outer surface (94) and the top surface (92) is between 60° and 90°;
9.3 at least a part of the outer surface (94) is convex;
9.4 at least a part of the outer surface (94) is convexly curved;
9.5 at least a part of the outer surface (94) is curved with a radius of 150-700 cm (59" - 276"), preferably between 300-400 cm (118" - 157"), most preferred 378 cm (148");
9.6 the at least one end seat cushion (90) has a trapezoidal contour with a wider top surface (92) and a narrower downwardly directed surface;
9.7 the at least one end seat cushion (90) is asymmetric or symmetric;
9.8 an angle between the external outer surface (94) and the top surface (92) is smaller than an angle between the inner surface (96) and the top surface (92); and/or
9.9 at least a part of the internal surface (96) extends in the horizontal direction and/or the angle between at least a part of the internal surface (96) and the top surface (92) is 90°.

10. Seat arrangement (18) according to any of the preceding claims, **characterized in that** each seat (20, 22, 23) of the at least one seat row (19) includes a seat cushion (90) arranged between two armrests (24), wherein the end seats (88) at the ends of the at least one seat row (19) include an end seat cushion (19) and an end armrest (24c) to be arranged between the end seat cushion (90) and the side wall (88),
the seat arrangement (18) being further **characterized by** at least one of the following features:
10.1 the end seat cushion (90) is raised with regard to seat cushions (90) of middle seats;
10.2 the end armrest (24c) is raised with regard to armrests (24) of middle seats;
10.3 the at least one seat row (19) is divided into two end groups (76) arranged on the ends of seat row (19) and at least one middle seat group (74), wherein
10.3.1 at least the end seats (88) or
10.3.2 the end seats (88) and at least one further seat (20, 22, 23) of the end groups (76) or
10.3.3 all seats (20, 22, 23) of the end groups (76) are raised with regard to
the seats (20, 22, 23) of the middle group (74);
and/or
10.4 the height by which the end seats (88) or parts thereof are raised with regard to middle seats or parts thereof is between 1" and 3", especially 2.1".

11. Aircraft cabin (10) comprising a floor (82) and concave side walls (84) and at least one seat arrangement (18) according to any of the preceding claims to be fixed on the floor (82),
11.1 wherein
11.1.1 the outer lateral contour of at least one end armrest (24c) and/or
11.1.2 the outer lateral contour of at least one end seat (88) and/or
11.1.3the outer lateral contour of at least one end seat cushion (90) is adapted to the contour of the side wall (84); and/or
11.2 a gap (78, 79) with a gap distance between 0.4" and 1 ", especially 0.5" is provided between an external outer surface (94)
11.2.1 of the end armrest (24c) and/or
11.2.2 of the end seat cushion (90) of each end seat (88) and the side wall (84).

12. Method for manufacturing an end armrest (24c) for use in a seat arrangement (18) according to claims 1 to 10 and/or in an aircraft cabin (10) according to claim 11 **characterized by** forming an outer external surface (94) of the end armrest (24c) to adapt it to the side wall (84) contour so that the whole end armrest (24c) can be arranged in close proximity to the side wall (84).

13. Method for manufacturing a seat (20, 22, 23) or a seat group (72) to be used in a seat arrangement (18) according to any of the claims 1 to 10 and/or in an aircraft cabin (10) according to claim 11, **characterized by** conducting the method of claim 12 for providing an end armrest (24c), fixing the end armrest (24c) to an end seat (88) and
forming an outer contour of a seat cushion (90) of the end seat (88) to adapt it to the contour of the side wall (84) so that a seat surface of the end seat (88) can be arranged in close proximity to the side wall (84).

14. Armrest (24) for use in a seat arrangement (18) according to any of the claims 1 to 10 and/or in an aircraft cabin (10) according to claim 11.

15. Seat (20, 22, 23) or seat group (72) for use in a seat arrangement (18) according to any of the claims 1 to 10 and/or in an aircraft cabin (10) according to claim 11.
